# FASCICULE DE BREVET EUROPEEN

(11) **EP 1 398 730 B1**
(45) Date de publication et mention de la délivrance du brevet: **24.05.2006**
(21) Numéro de dépôt: 03292086.0
(22) Date de dépôt: 25.08.2003
(51) Int. Cl.: G06K 17/00, G06K 7/00

(54) **Installation de traitement de produits et élément d'acquisition de données correspondant**
Anlage zur Behandlung von Produkten und dazugehörige Datenerfassungseinheit
Plant for processing products and corresponding data acquisition unit

(30) Priorité: 26.08.2002 FR 0210583
(43) Date de publication de la demande: 17.03.2004
(73) Titulaire: Jouan, 44800 Saint Herblain (FR)
(72) Inventeur: Eneau, Jean-Philippe, 44115 Basse-Goulaine (FR); Metais, Dominique, 44470 Thouare sur Loire (FR); Reveau, Raphael, 44360 Cordemais (FR)
(74) Mandataire: Domenego, Bertrand

(56) Documents cités:
- DE-A- 19 530 391
- FR-A- 2 761 790
- FR-A- 2 817 370
- GB-A- 2 371 722
- US-A- 4 628 193
- PATENT ABSTRACTS OF JAPAN vol. 014, no. 267 (P-1058), 8 juin 1990 (1990-06-08) & JP 02 074889 A (SHIMIZU CORP;OTHERS: 01), 14 mars 1990 (1990-03-14)

## Description

La présente invention concerne une installation de traitement de produits selon le préambule de la revendication 1.

L'invention s'applique en particulier au traitement de matières ou d'échantillons biologiques et en particulier à la culture, à la conservation et/ou à l'analyse de cellules ou de microorganismes.

FR-2 761 790 décrit un gant de réception d'un signal émis par un transpondeur sur le corps d'un animal. US-4 628 193 décrit un dispositif portable pour contrôler l'exécution d'operations.

On connaît une installation [ ] du type précité du document FR-2 817 370. Les moyens d'émission d'ondes radiofréquences des récipients et des postes de travail sont des transpondeurs. L'élément de réception des ondes radiofréquences comprend un plateau de support destiné à recevoir les récipients de produits à traiter. Le plateau est muni d'une antenne de réception des ondes radiofréquences et de moyens de transmission des informations reçues depuis les transpondeurs vers l'unité de traitement d'informations.

Une telle installation permet d'assurer, en plus du traitement des produits, un suivi historique ou « traçabilité » des produits traités en associant des informations relatives à leurs identités et à celles des postes de travail dans lesquels on les a placés, et donc aux opérations de traitement auxquels ils ont été soumis.

Toutefois, ce suivi historique nécessite l'utilisation du plateau de support. Si l'opérateur n'utilise pas un tel plateau, le suivi historique n'est pas assuré.

Un but de l'invention est de résoudre ce problème en fournissant une installation de traitement de produits du type précité qui permette d'assurer de manière plus fiable une gestion d'informations relatives aux produits.
A cet effet, l'invention a pour objet une installation selon la revendication 1.

Selon des modes particuliers de réalisation, l'installation peut comprendre l'une ou plusieurs des caractéristiques des revendications dépendantes.

L'invention sera mieux comprise à la lecture de la description qui va suivre, donnée uniquement à titre d'exemple, et faite en se référant aux dessins annexés, sur lesquels :
- la figure 1 est une vue schématique d'une installation selon l'invention, et
- les figures 2 à 5 sont des vues schématiques en perspectives illustrant différentes étapes du rangement d'un récipient de produit à traiter dans un poste de travail de l'installation de la figure 1.

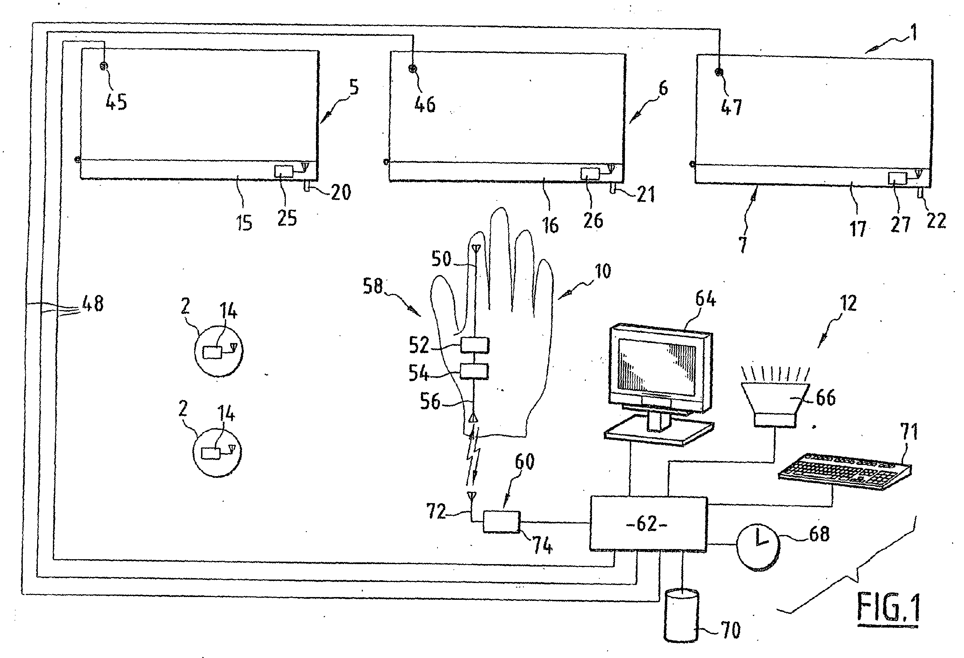

La figure 1 illustre schématiquement une installation 1 de traitement de produits, par exemple des prélèvements humains. Plus précisément, l'installation 1 est par exemple destinée à soumettre ces prélèvements à une opération de croissance de bactéries, à mener une analyse bactériologique de ces prélèvements et à les stocker.

On notera que sur la figure 1, l'échelle des différents éléments qui seront décrits par la suite n'a pas été respectée.

L'installation 1 comprend :
- des récipients 2 de produits à traiter,
- des postes de travail 5 à 7,
- au moins un gant 10 de manipulation des récipients 2, et
- un système 12 de gestion d'informations relatives aux produits, et notamment de suivi des opérations qu'ils subissent.

Les récipients 2 sont par exemple des boîtes de Pétri. Seules deux de ces boîtes 2 ont été représentées sur la figure 1. Chacune des boîtes 2 est munie d'un transpondeur radiofréquences d'identification 14.

Chaque boîte 2 contient un milieu de culture ensemencé par un prélèvement. Cet ensemencement a été effectué préalablement sous une hotte à flux laminaire.

Chaque transpondeur 14 comprend de manière classique un circuit imprimé possédant une antenne et sur lequel est disposé un circuit intégré comprenant une mémoire, dans laquelle un identifiant ou information d'identification du prélèvement contenu dans la boîte 2 est stocké, et un module d'émission et de réception d'ondes radiofréquences.

Chaque transpondeur 14 est un transpondeur passif, c'est à dire ne comprenant pas de moyens autonomes d'alimentation électrique telle qu'une pile ou une batterie. Un tel transpondeur 14 est alimenté en énergie électrique par des ondes radiofréquences reçues par son antenne. Ces ondes radiofréquences reçues sont modifiées en fonction de l'identifiant stocké et rétrodiffusées par le transpondeur 14. Un tel transpondeur 14 constitue donc un moyen d'émission stimulé d'ondes radiofréquences. Ce transpondeur 14 possède une puissance d'émission stimulée inférieure à 10mW, ou de préférence inférieure à 5mW. Ainsi, chaque transpondeur 14 a une portée d'émission faible, typiquement inférieure à 10cm. Un tel transpondeur 14 peut être réalisé sous forme d'une pastille souple adhésive, et son coût est réduit.

Dans d'autres variantes, les transpondeurs 14 peuvent être des transpondeurs actifs fonctionnant éventuellement en lecture/écriture.

Typiquement, la fréquence des ondes émises et reçues par les transpondeurs 14 est de 13,56MHz ou 125kHz. Bien entendu d'autres fréquences peuvent être envisagées.

Le poste de travail 5 est par exemple un incubateur adapté pour créer une atmosphère contrôlée propre au développement de bactéries à détecter dans les milieux de culture.

Le poste de travail 6 est par exemple un dispositif d'analyse permettant de déterminer la nature de bactéries présentes dans les milieux de culture des boîtes 2.

Le poste de travail 7 est par exemple un réfrigérateur permettant le stockage des prélèvements contenus des boîtes 2, par exemple en vue d'une autre analyse.

Chaque poste de travail 5 à 7 comprend une porte, respectivement 15 à 17, pour accéder à l'intérieur du poste de travail. Les portes .15 à 17 sont munies de poignées 20 à 22 permettant de les manoeuvrer.

Chaque poste de travail 5 à 7 est muni d'un transpondeur radiofréquences d'identification, respectivement 25 à 27, par exemple de même nature que les transpondeurs 14.

Les transpondeurs 25 à 27 sont disposés au voisinage des poignées 20 à 22 ou même sur celles-ci.

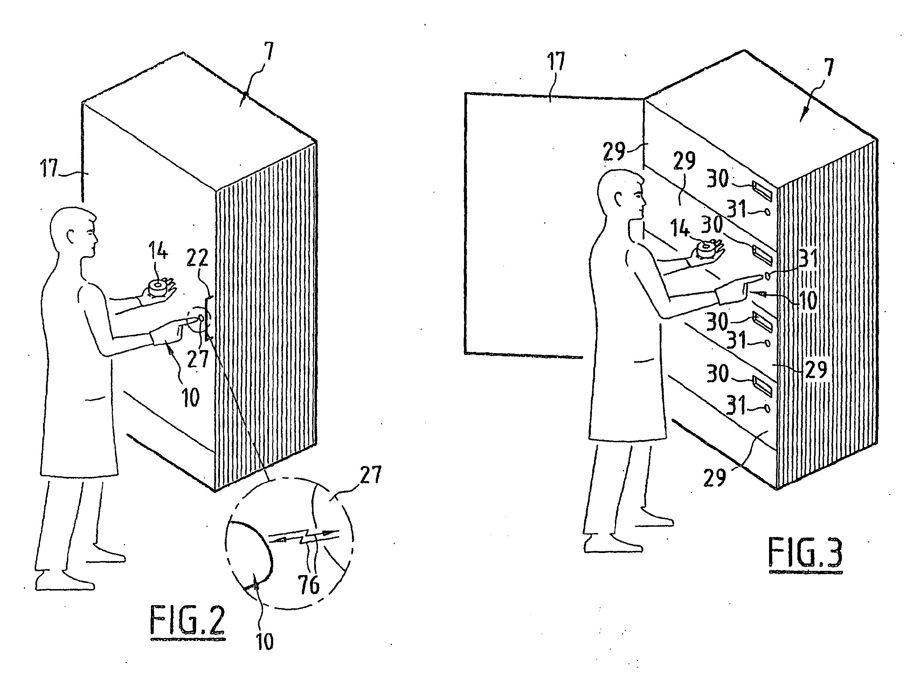

Comme illustré plus particulièrement par les figures 3 à 5, le réfrigérateur 7 comprend plusieurs compartiments 28 superposés auxquels on peut accéder grâce à des portes 29 respectives une fois que la porte 17 du réfrigérateur 7 a été ouverte. Un seul compartiment 28 est visible sur les figures 3 à 5.

Chaque porte 29 est munie d'une poignée de manoeuvre 30 ainsi que d'un transpondeur radiofréquences 31 d'identification du compartiment 28, par exemple de même nature que les transpondeurs 14. Chaque transpondeur 31 est par exemple situé au voisinage de la poignée 30 ou même sur celle-ci. On notera que sur les figures 2 à 5 les transpondeurs 31, ainsi que les autres transpondeurs, ont été schématisés par des cercles.

Des modules de rangement 33 coulissant longitudinalement sont disposés les uns à côté des autres dans chaque compartiment 28. Chaque module 33 est muni d'une poignée de saisie 34 et d'un transpondeur radiofréquences d'identification 35 disposé au voisinage ou même sur la poignée 34.

Les transpondeurs 35 sont par exemple de même nature que les transpondeurs 14.

Comme illustré par la figure 5, chaque module 33 comprend des étagères et des cloisons qui délimitent intérieurement un réseau de logements 37 recevant des tiroirs 38 coulissant transversalement. Ces tiroirs 38 peuvent être munis chacun d'une poignée 39 et comportent un transpondeur radiofréquences d'identification 40 disposé au voisinage ou même sur la poignée 39.

Les transpondeurs 40 sont par exemple de même nature que les transpondeurs 14.

Comme illustré par la figure 1, chaque poste de travail 5 à 7 est de préférence muni de moyens, respectivement 45 à 47, d'acquisition de paramètres relatifs à l'opération mise en oeuvre dans le poste de travail considéré. Ces moyens d'acquisition sont raccordés, par exemple par des liaisons filaires 48 au système de gestion 12.

Le gant 10 est un gant tel que ceux utilisés classiquement pour manipuler les prélèvements et qui comporte en outre une antenne 50 de réception des ondes radiofréquences provenant des transpondeurs 14, 25 à 27, 31, 35 et 40, un premier modulateur/démodulateur 52, un deuxième modulateur/démodulateur 54 et une antenne 56 pour émettre des ondes radiofréquences à une fréquence différente de celle des ondes émises par les transpondeurs 14, 25 à 27, 31, 35 et 40. Typiquement, cette fréquence peut être de 433MHz.

L'antenne 50 est par exemple disposée au bout de l'index du gant 10, noyée dans le matériau du gant. Il s'agit d'une antenne ayant un champ d'émission et de réception de portée réduite, typiquement inférieure à 10cm et de préférence 5cm.

Les antennes 50 et 56 et les modulateurs/démodulateurs 52 et 54 forment un répéteur 58 pour renvoyer vers le système de gestion 12 les informations d'identification reçues des transpondeurs 14, 25 à 27, 31, 35 et 40.

Ce répéteur 58 peut comprendre des moyens autonomes d'alimentation électrique, une horloge et éventuellement une mémoire de stockage. Le répéteur 58 est adapté pour procéder automatiquement et régulièrement dans le temps ou en permanence, via le modulateur/démodulateur 52 et l'antenne 50, à des interrogations dans le champ d'émission et de réception de l'antenne 50.

Ces interrogations sont assurées par l'émission d'ondes radiofréquences par l'antenne 50.

Si un transpondeur 14, 25 à 27, 31, 35 ou 40 est présent dans le champ de réception de l'antenne 50, ce transpondeur est alimenté en énergie électrique par les signaux émis par le répéteur 58 et transmet en réponse l'information d'identification stockée dans sa mémoire. Si l'antenne 50 est disposée dans le champ d'émission du transpondeur considéré, elle reçoit les ondes radiofréquences que le transpondeur émet. Ces ondes radiofréquences reçues par l'antenne 50 sont alors démodulées par le modulateur/démodulateur 52 puis remodulées par le modulateur/démodulateur 54 pour être émises par l'antenne 56 sous forme d'ondes radiofréquences ayant une portée suffisamment importante pour être reçues par le système de gestion 12 quel que soit l'emplacement du gant 10 dans l'installation 1.

Le système de gestion 12 comprend :
- un récepteur 60 des ondes radiofréquences émises par l'antenne 56 du répéteur 58,
- une unité électronique 62 de traitement d'informations,
- un écran 64,
- un haut-parleur 66,
- une horloge 68,
- une base de données 70, et
- un clavier 71.

Le récepteur 60 comprend une antenne 72 et un modulateur/démodulateur 74 pour recevoir et démoduler les ondes radiofréquences émises par l'antenne 56 et transmettre les informations démodulées correspondantes à l'unité de traitement d'informations 62.

L'unité 62 comprend un microprocesseur programmé convenablement pour remplir les fonctions décrites ci-après.

Lorsqu'un opérateur souhaite disposer un prélèvement contenu dans une boîte 2 dans l'incubateur 5, il procède comme suit.

Ayant saisi la boîte 2 dans sa main gauche enfilée dans un gant classique, il vient viser avec l'index de sa main droite, placée dans le gant 10, le transpondeur 25 de l'incubateur 5. Le répéteur 58 interroge alors le transpondeur 25 qui lui fournit en réponse l'information d'identification de l'incubateur 5. Cette information d'identification est renvoyée par le répéteur 58 vers l'unité 62 de traitement d'informations.

L'opérateur ouvre ensuite l'incubateur 5 grâce à la poignée 20 puis vient placer la boîte 2 sur une étagère intérieure de l'incubateur 5. Il vise alors avec l'index de sa main droite le transpondeur 14 de la boîte 2 considérée. Le répéteur 58 interroge alors le transpondeur 14 et reçoit l'information d'identification du prélèvement introduit dans l'incubateur 5 qu'il transmet via le récepteur 60 à l'unité 62 de traitement d'informations. L'unité 62 associe les deux informations d'identification reçues et une information temporelle fournie par l'horloge 68 et les stocke dans la base de données 70. On sait alors que le prélèvement considéré a été placé dans l'incubateur 5.

L'unité 62 de traitement d'informations associe ensuite régulièrement dans le temps et stocke dans la base de données 70 les informations reçues des moyens 45 d'acquisition avec les informations temporelles fournies par l'horloge 68 et l'information d'identification du prélèvement considéré. Cela se poursuit dans le temps jusqu'à ce que le prélèvement considéré soit retiré de l'incubateur 5.

Pour cela, l'opérateur procède comme décrit précédemment, c'est à dire qu'il vient placer l'antenne 50 du gant 10 à proximité du transpondeur 25 de l'incubateur 5, ouvre sa porte 15, puis vient placer l'antenne 50 du gant 10 à proximité du transpondeur 14 de la boîte 2 contenant le prélèvement considéré. Enfin, l'opérateur retire cette boîte 2 de l'incubateur 5.

L'unité de traitement d'informations 62 reçoit alors, via le répéteur 58 et le récepteur 60, à nouveau les informations d'identification de l'incubateur 5 et du prélèvement contenu dans la boîte 2 retirée de l'incubateur 5. L'unité 62 associe ces informations, ainsi qu'une information temporelle fournie par l'horloge 68, à un retrait du prélèvement considéré de l'incubateur 5. Ces différentes informations associées sont stockées dans la base de données 70.

De manière analogue, il est possible de stocker dans la base de données 70, en relation avec l'identifiant du prélèvement considéré des informations indiquant s'il a été introduit dans le dispositif d'analyse 6, à quel moment, combien de temps il est resté dans le dispositif d'analyse 6, s'il en a été retiré, à quel moment, et quel a été le résultat de l'analyse. Cette dernière information est fournie par les moyens 46 d'acquisition.

A l'issue de l'analyse et après retrait de la boîte 2 considérée du dispositif d'analyse 6, le stockage de la boîte 2 dans le réfrigérateur 7 peut être effectué comme suit.

Comme illustré par la figure 2, l'opérateur place tout d'abord l'index du gant 10 à proximité du transpondeur 27 du réfrigérateur 7 pour que l'unité 62 reçoive l'information d'identification du réfrigérateur 7. L'émission et la réception d'ondes radiofréquences entre le gant 10 et le transpondeur 27 ont été schématisées par les flèches 76 sur la partie cerclée agrandie de la figure 2. L'opérateur ouvre ensuite la porte 17 grâce à la poignée 22.

Ensuite, et comme illustré par la figure 3, l'opérateur place l'index du gant 10 à proximité du transpondeur 31 de la porte 29 du compartiment 28 dans lequel il veut ranger la boîte 2. L'information d'identification du compartiment 28 est alors transmise à l'unité de traitement d'informations 62.

L'opérateur ouvre alors la porte 29 et accède au compartiment 28 choisi.

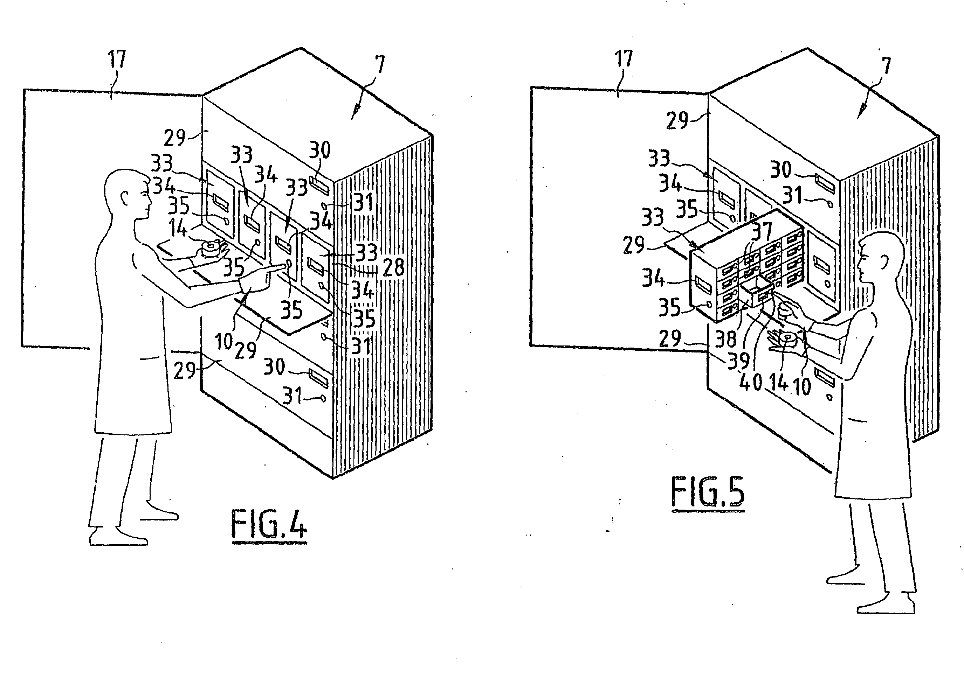

Ensuite, et comme illustré par la figure 4, l'opérateur vise avec l'index de sa main droite le transpondeur 35 du module de rangement 33 dans lequel il veut ranger la boîte 2. L'unité de traitement d'informations 62 reçoit alors l'information d'identification du module de rangement 33 choisi. L'opérateur extrait ensuite le module de rangement 33 considéré grâce à sa poignée 34.

Comme illustré par la figure 5, l'opérateur vise enfin le transpondeur 40 du tiroir 38 dans lequel il veut disposer la boîte 2, pour transmettre l'information d'identification du tiroir 38 à l'unité 62. Enfin, il place la boîte 2 dans le tiroir 38 choisi et vient placer l'index de sa main droite à proximité du transpondeur 14 de la boîte 2.

L'unité 62 a alors reçu les identifiants du réfrigérateur 7, du compartiment 28, du module 33 et du tiroir 38 dans lesquels le prélèvement considéré a été stocké ainsi que l'identifiant du prélèvement. Ces différentes informations sont associées à une information temporelle fournie par l'horloge 68 et stockées par l'unité 62 dans la base de données 70.

La base de données 70 contient alors des informations permettant de savoir que le prélèvement considéré est stocké dans le réfrigérateur 7 et l'emplacement exact de ce prélèvement dans le réfrigérateur 7.

Pour retirer le prélèvement considéré du réfrigérateur 7, l'opérateur procède de manière analogue en venant grâce à l'index de sa main droite, fournir successivement à l'unité de traitement d'informations 62 les informations d'identification du réfrigérateur 7, du compartiment 28, du module 33 et du tiroir 38 auxquels il accède et enfin du prélèvement qu'il en retire.

On notera que l'unité 62 peut également assurer le guidage de l'opérateur au cours d'une opération d'introduction ou de retrait du prélèvement du réfrigérateur 7 en lui fournissant, grâce à l'écran 64 et/ou au haut-parleur 66, des signaux infirmant ou confirmant les actes qu'il effectue.

Ainsi, si l'opérateur veut accéder à un prélèvement donné stocké dans le réfrigérateur 7, il peut saisir grâce au clavier 71 un code correspondant à ce prélèvement. L'unité 62 lui fournit alors, par exempte via l'écran 64, des informations relatives à la localisation exacte de ce prélèvement dans l'installation 1.

L'opérateur se dirige alors vers le réfrigérateur 7 et place l'index de sa main droite à proximité du transpondeur 27. L'unité 62 provoque l'émission, par exemple via le haut-parleur 66, d'un signal sonore confirmant que le prélèvement recherché se trouve bien dans le réfrigérateur 7.

Si l'opérateur avait par erreur visé le transpondeur 25 de l'incubateur 5, le haut-parleur 66 aurait émis un signal différent indiquant que le prélèvement recherché ne s'y trouve pas.

Ensuite, l'unité 62 va fournir, par l'intermédiaire du haut-parleur 66, des signaux confirmant ou infirmant que l'opérateur accède au bon compartiment 28, au bon module 33 et au bon tiroir 38 afin de retirer le prélèvement recherché.

De même, lorsque l'opérateur souhaite ranger un prélèvement, l'unité de traitement d'informations 62 peut lui indiquer l'emplacement d'un tiroir 38 libre et le guider jusqu'à celui-ci.

Ainsi, l'installation 1 décrite ci-dessus permet de manière conviviale et fiable d'assurer une gestion d'informations relatives aux prélèvements traités par l'installation 1, et notamment d'assurer un suivi historique des opérations de traitement subi par les prélèvements. En outre, l'installation 1 permet de connaître la localisation des prélèvements et d'assurer un guidage de l'opérateur.

Cette gestion et ce guidage sont particulièrement conviviaux car l'opérateur n'a qu'à placer sa main à proximité des transpondeurs correspondants aux emplacements où il intervient. De plus, la gestion des informations est fiable car l'opérateur utilise nécessairement un gant pour manipuler les prélèvements et les boîtes 2 qui les contiennent.

Pour améliorer encore cette convivialité, le gant 10 peut comprendre plusieurs antennes 50, par exemple une antenne dans chacun des doigts et/ou dans la paume du gant.

Si les transpondeurs d'identification sont placés sur les poignées 20 à 22, 30, 34 et 39, il n'est alors pas nécessaire de venir viser spécifiquement ces transpondeurs par l'intermédiaire de l'index du gant 10, l'acquisition des informations d'identification se faisant automatiquement lors de la saisie des poignées par l'opérateur.

Dans une variante non représentée, le gant 10 peut comprendre des moyens d'activation de l'interrogation par le répéteur 58. Dans ce cas, l'opérateur active l'interrogation lorsque cela est nécessaire.

Dans l'exemple décrit ci-dessus, les modulateurs/démodulateurs 52 et 54 et l'antenne 56 forment des moyens de transmission, vers l'unité 62, des informations d'identification reçues par l'antenne 50.

Dans des variantes non-représentées, ces moyens de transmission des informations d'identification peuvent avoir une structure différente de celle décrite.

Ainsi, ils peuvent être remplacés par une liaison filaire raccordant le gant 10 directement au modulateur/démodulateur 74 qui est alors adapté pour démoduler les ondes radiofréquences reçues par l'antenne 50 avant de fournir les informations d'identification à l'unité de traitement 62.

Dans une autre variante, ces moyens de transmission peuvent comprendre un émetteur d'ondes infrarouges pour transmettre les informations à un récepteur 60 correspondant associé à l'unité 62.

Dans encore une autre variante, les moyens de transmission peuvent comprendre unidispositif intermédiaire de relais porté par l'opérateur. Le gant 10 peut par exemple être relié par une liaison filaire à ce dispositif intermédiaire.

Dans un autre mode de réalisation non-représenté, l'unité 62, l'écran 64, le haut-parleur 66, l'horloge 68, la base de données 70 et le clavier 71 peuvent être incorporés dans le gant 10 lui-même, par exemple sur le dos du gant, ou former un système de gestion portatif 12 porté par l'opérateur. Les signaux de guidage de l'opérateur peuvent être alors uniquement des signaux visuels fournis par l'écran 64.

Les informations reçues par les moyens 45 et 47 d'acquisition peuvent alors être transmises à l'unité 62 par des liaisons à distance, par exemple par ondes radiofréquences.

Dans encore une autre variante non-représentée, les principes décrits ci-dessus peuvent être utilisés uniquement pour localiser des prélèvements dans l'installation 1 qui ne comporte pas de moyens 45 à 47 d'acquisition.

Dans une variante, lors du guidage de l'opérateur, l'unité 62 empêche l'accès aux emplacements autres que l'emplacement recherché en verrouillant les portes correspondantes.

De manière générale, les récipients 2 peuvent être d'autres récipients que des boîtes de Pétri, par exemple des tubes à essai, ou peuvent ne pas contenir directement les prélèvements.

Dans une variante, l'opérateur peut porter un badge muni d'un transpondeur radiofréquences d'identification qu'il vient interroger grâce au gant 10 avant chaque opération d'introduction ou de retrait qu'il effectue. Les différentes informations liées aux prélèvements sont alors associées à l'identité de l'opérateur qui est intervenu sur le prélèvement.

On notera que l'installation 1 décrite peut être réalisée à partir de postes de travail et récipients 2 préexistants, sans nécessiter de modifications importantes ou coûteuses.

En effet, il suffit pour cela de munir les postes de travail et les récipients 2 de transpondeurs passifs, tels que ceux décrits ci-dessus, et dont le coût est particulièrement réduit. Plus particulièrement, dans le cas où les transpondeurs sont des pastilles adhésives, il suffit de les coller sur des parois des postes de travail et des récipients.

Dans certaines variantes, les transpondeurs d'identification, notamment 14, peuvent être utilisés en lecture et en écriture. Le gant 10 est alors utilisé comme dispositif d'écriture.

Dans encore une autre variante, le clavier 71 peut être remplacé par des moyens de saisie d'une autre nature.

De manière générale, l'invention peut s'appliquer à toute installation de traitement de matières ou de produits biologiques, et les postes de travail peuvent être par exemple des incubateurs, des étuves, des réfrigérateurs, des paillasses surmontées de hottes à flux laminaire, des centrifugeuses, ou tout poste de travail muni de moyen de mise en oeuvre d'une opération de traitement

Ici, le terme de traitement s'entend de manière générale comme toute opération ou suite d'opérations soumettant un produit à des conditions ou à des interventions déterminées, et peut consister en une simple opération de stockage dans des conditions déterminées.

Ainsi, l'installation peut ne comprendre qu'un seul poste de travail sous forme d'un réfrigérateur.

De manière plus générale, les principes ci-dessus peuvent s'appliquer au traitement de produits dans d'autres domaines que le domaine biologique. Ils peuvent ainsi s'appliquer, par exemple, à la fabrication de composants électroniques.

De manière encore plus générale, le gant peut être remplacé par un élément adaptable sur le corps ou un vêtement d'un opérateur. En d'autres termes, l'élément comprendra alors des moyens autonomes de retenue par rapport au corps ou au vêtement de l'opérateur.

Ainsi, l'élément peut être ajustable sur un membre supérieur de l'opérateur et être constitué par une bague, un bracelet ajustable au bras ou au poignet, un ou plusieurs doigts de gant...

## Revendications

1. Installation (1) de traitement de produits, du type comprenant :
- des récipients (2) de produits à traiter munis de moyens (14) d'émission d'ondes radiofréquences pour fournir des informations d'identification des produits,
- au moins un poste de travail (5-7) pour mettre en oeuvre une opération de traitement des produits, le poste de travail étant muni de moyens (25-27) d'émission d'ondes radiofréquences pour fournir une information d'identification du poste de travail, et
- un système de gestion d'informations relatives aux produits, le système comprenant une base de données (70), une unité (62) de traitement d'informations et au moins un élément (10) comportant lui-même :
• au moins une antenne (50) de réception des ondes radiofréquences émises par les moyens (14, 25-27) d'émission, et
• des moyens (52, 54, 56) de transmission, vers l'unité (62) de traitement d'informations, des informations d'identification reçues des moyens (14, 25-27) d'émission d'ondes radiofréquences pour que l'unité (62) de traitement d'informations associe les informations d'identification des produits et du poste de travail et les stocke dans la base de données (70),
**caractérisée en ce que** l'élément est adaptable sur le corps ou un vêtement d'un opérateur.

2. installation selon la revendication 1, **caractérisée en ce que** les moyens de transmission comprennent un émetteur (54, 56) et le système (12) de gestion d'informations comprend en outre un récepteur correspondant (60) raccordé à l'unité de traitement d'informations (62).

3. Installation selon la revendication 2, **caractérisée en ce que** l'émetteur (54, 56) et le récepteur (60) sont respectivement un émetteur et un récepteur d'ondes radiofréquences.

4. Installation selon la revendication 3, **caractérisée en ce que** la fréquence des ondes émise par les moyens (14, 25- 27) d'émission des récipients (2) et des postes de travail (5-7) est différente de celle des ondes émises par l'émetteur (54, 56) de l'élément (10).

5. Installation selon la revendication 1, **caractérisée en ce que** les moyens de transmission comprennent une liaison filaire reliant l'élément (10) à l'unité de traitement d'informations (62).

6. Installation selon l'une des revendications précédentes, **caractérisée en ce que** le poste de travail (5-7) comprend un organe (20-22) d'ouverture du poste de travail, et les moyens (25-27) d'émission d'ondes radiofréquences du poste de travail sont disposés sur ou à proximité de l'organe d'ouverture (20-22).

7. Installation selon l'une des revendications précédentes, **caractérisée en ce que** le poste de travail (5-7) comprend plusieurs emplacements (28, 33, 38) de logement des récipients (2), et **en ce que** chaque emplacement (28, 33, 38) comporte des moyens (31, 35, 40) d'émission d'ondes radiofréquences pour fournir, via l'élément (10), une information d'identification de l'emplacement (28, 33, 38) à l'unité de traitement d'informations (62).

8. Installation selon la revendication 7, **caractérisée en ce que** l'unité de traitement d'informations (62) est adaptée pour fournir des signaux infirmant ou confirmant que l'élément (10) est placé au voisinage d'un emplacement (28, 33, 38) dans lequel un récipient (2) recherché est disposé.

9. installation selon l'une des revendications précédentes, **caractérisée en ce que** l'unité de traitement d'informations (62) est adaptée pour fournir des signaux infirmant ou confirmant que l'élément (10) est placé au voisinage d'un emplacement (28, 33, 37) dans lequel un récipient (2) doit être disposé.

10. Installation selon l'une des revendications précédentes, **caractérisée en ce que** l'élément (10) est un gant.

11. Installation selon la revendication 10, **caractérisée en ce que** la ou chaque antenne de réception (50) du gant est logée dans un doigt ou la paume du gant (10).

12. Installation selon l'une des revendications précédentes,
**caractérisée en ce que** les moyens (14, 25-27, 31, 35, 40) d'émission d'ondes radiofréquences ont une puissance d'émission inférieure à 10mW.

13. installation selon la revendication 12, **caractérisée en ce que** les moyens (14, 25-27, 31, 35, 40) d'émission d'ondes radiofréquences sont passifs.

14. Installation selon l'une des revendications précédentes, **caractérisée en ce que** le poste de travail comprend des moyens (45-47) d'acquisition d'au moins un paramètre relatif à la mise en oeuvre de l'opération de traitement, et un dispositif (48) de transmission de ce paramètre à l'unité de traitement d'informations (62) pour l'associer aux informations d'identification des produits traités dans le poste de travail.

## Claims

1. Installation (1) for the processing of products, of the type comprising:
- containers (2) for products requiring processing fitted with means (14) for the emission of radiofrequency waves in order to provide product identification information.
- at least one workstation (5-7) to implement a product processing operation, the workstation being provided with means (25-27) for the emission of radiofrequency waves to provide information identifying the workstation, and
- a system for the processing of information relating to the products, the system comprising a database (70), a unit (62) for the processing of information and at least one component (10) itself comprising:
• at least one antenna (50) receiving radiofrequency waves emitted by the emission means (14, 25-27), and
• means (52, 54, 56) for transmitting identification information received from radiofrequency wave emitting means (14, 25-27) to information processing unit (62) so that the information processing unit (62) associates the information identifying the products and the workstation and stores them in the database (70),
**characterised in that** the component can be fitted onto an operator's body or clothing.

2. Installation according to claim 1, **characterised in that** the transmission means comprise an emitter (54, 56) and the information processing system (12) also comprises a corresponding receiver (60) connected to the information processing unit (62).

3. Installation according to claim 2, **characterised in that** the emitter (54, 56) and the receiver (60) are a radiofrequency wave emitter and receiver respectively.

4. Installation according to claim 3, **characterised in that** the frequency of the waves emitted by emission means (14, 25-27) for the containers (2) and workstations (5-7) differs from that of the waves emitted by the emitter (54, 56) of component (10).

5. Installation according to claim 1, **characterised in that** the transmission means comprise a wire link connecting component (10) to the information processing unit (62).

6. Installation according to any one of the preceding claims, **characterised in that** the workstation (5-7) comprises a control (20-22) opening the workstation and the radiofrequency wave emission means (25-27) for the workstation are located on or close to the opening control (20-22).

7. Installation according to any one of the preceding claims, **characterised in that** the workstation (5-7) comprises several locations (28, 33, 38) housing containers (2), and **in that** each location (28, 33, 38) incorporates means (31, 35, 40) for the emission of radiofrequency waves to provide information identifying the location (28, 33, 38) to the information processing unit (62) via component (10),

8. Installation according to claim 7, **characterised in that** the information processing unit (62) is designed to provide signals which confirm whether or not component (10) is located in the vicinity of a location (28, 33, 38) in which a container (2) sought is located.

9. Installation according to any one of the preceding claims, **characterised in that** the information processing unit (62) is designed to provide signals which confirm whether or not component (10) is located in the vicinity of a location (28, 33, 37) in which a container (2) should be located.

10. Installation according to any one of the preceding claims, **characterised in that** component (10) is a glove.

11. Installation according to claim 10, **characterised in that** the or each of the receiving antennae (50) of the glove is housed in a finger or the palm of the glove (10).

12. Installation according to any one of the preceding claims, **characterised in that** the means (14, 25-27, 31, 35, 40) for the emission of radiofrequency waves have an emission power of less than 10 mW.

13. Installation according to claim 12, **characterised in that** the means (14, 25-27, 31, 35, 40) for the emission of radiofrequency waves are passive.

14. Installation according to any one of the preceding claims, **characterised in that** the workstation comprises means (45-47) for the acquisition of at least one parameter relating to implementation of the processing operation, and a device (48) for transmitting this parameter to the information processing unit (62) to associate it with information identifying the products processed in the workstation.

## Patentansprüche

1. Anlage (7) zur Behandlung von Produkten, von dem Typ umfassend:
- Behälter (2) für die zu behandelnden Produkte, welche mit Sendemitteln (14) für Hochfrequenzwellen ausgestattet sind, um Informationen zur Identifikation der Produkte zu liefern,
- wenigstens einen Arbeitsplatz (5 - 7), um eine Operation zur Behandlung der Produkte auszuführen, wobei der Arbeitsplatz mit Sendemitteln (25 - 27) für Hochfrequenzwellen ausgestattet ist, um eine Information zur Identifikation des Arbeitsplatzes zu liefern, und
- ein System zur Verwaltung von Informationen in Bezug auf die Produkte, wobei das System eine Datenbank (70), eine Einheit (62) zur Verarbeitung von Informationen und wenigstens ein Element (10) umfasst, welches seinerseits umfasst:
- wenigstens eine Antenne (50) zum Empfang der durch die Sendemittel (14, 25 - 27) ausgesendeten Hochfrequenzwellen und
- Mittel (52, 54, 56) zur Übertragung der Informationen zur Identifikation, die von den Sendemitteln (14, 25 - 27) für Hochfrequenzwellen empfangen werden, an die Einheit (62) zur Verarbeitung von Informationen, damit die Einheit (62) zur Verarbeitung von Informationen die Informationen zur Identifikation der Produkte und des Arbeitsplatzes verknüpft und sie in der Datenbank (70) speichert,
**dadurch gekennzeichnet, dass** das Element an den Körper oder ein Bekleidungsstück einer Bedienperson anpassbar ist.

2. Anlage nach Anspruch 1, **dadurch gekennzeichnet, dass** die Mittel zur Übertragung einen Sender (54, 56) umfassen und das System (12) zur Verwaltung von Informationen darüber hinaus einen mit der Einheit zur Verarbeitung von Informationen (62) verbundenen, entsprechenden Empfänger (60) umfasst.

3. Anlage nach Anspruch 2, **dadurch gekennzeichnet, dass** der Sender (54, 56) und der Empfänger (60) jeweils ein Sender bzw. ein Empfänger für Hochfrequenzwellen ist.

4. Anlage nach Anspruch 3, **dadurch gekennzeichnet, dass** die Frequenz der durch die Sendemittel (14, 25 - 27) der Behälter (2) und der Arbeitsplätze (5 - 7) gesendeten Wellen von jener der durch den Sender (54, 56) des Elements (10) gesendeten Wellen abweicht.

5. Anlage nach Anspruch 1, **dadurch gekennzeichnet, dass** die Mittel zur Übertragung eine Kabelverbindung umfassen, die das Element (10) mit der Einheit zur Verarbeitung von Informationen (62) verbindet.

6. Anlage nach einem der vorhergehenden Ansprüche, **dadurch gekennzeichnet, dass** der Arbeitsplatz (5 - 7) ein Glied (20 - 22) zur Öffnung des Arbeitsplatzes umfasst, und die Sendemittel (25 - 27) für Hochfrequenzwellen des Arbeitsplatzes auf oder in der Nähe des Glieds zur Öffnung (20 - 22) angeordnet sind.

7. Anlage nach einem der vorhergehenden Ansprüche, **dadurch gekennzeichnet, dass** der Arbeitsplatz (5 - 7) mehrere Stellen (28, 33, 38) zur Aufnahme der Behälter (2) umfasst, und dass jede Stelle (28, 33, 38) Sendemittel (31, 35, 40) für Hochfrequenzwellen aufweist, um über das Element (10) eine Information zur Identifikation der Stelle (28, 33, 38) an die Einheit zur Verarbeitung von Informationen (62) zu liefern.

8. Anlage nach Anspruch 7, **dadurch gekennzeichnet, dass** die Einheit zur Verarbeitung von Informationen (62) angepasst ist, um Signale zu liefern, die verneinen oder bestätigen, dass das Element (10) in der Nähe einer Stelle (28, 33, 38) platziert ist, in der ein gesuchter Behälter (2) angeordnet ist.

9. Anlage nach einem der vorhergehenden Ansprüche, **dadurch gekennzeichnet, dass** die Einheit zur Verarbeitung von Informationen (62) angepasst ist, um Signale zu liefern, die verneinen oder bestätigen, dass das Element in der Nähe einer Stelle (28, 33, 37) platziert ist, in der ein Behälter (2) angeordnet werden soll.

10. Anlage nach einem der vorhergehenden Ansprüche, **dadurch gekennzeichnet, dass** das Element (10) ein Handschuh ist.

11. Anlage nach Anspruch 10, **dadurch gekennzeichnet, dass** die oder jede Empfangsantenne (50) des Handschuhs in einem Finger oder in der Handfläche des Handschuhs (10) untergebracht ist.

12. Anlage nach einem der vorhergehenden Ansprüche, **dadurch gekennzeichnet, dass** die Sendemittel (14, 25 - 27, 31, 35, 40) für Hochfrequenzwellen eine Sendeleistung unter 10 mW aufweisen.

13. Anlage nach Anspruch 12, **dadurch gekennzeichnet, dass** die Sendemittel (14, 25 - 27, 31, 35, 40) für Hochfrequenzwellen passiv sind.

14. Anlage nach einem der vorhergehenden Ansprüche, **dadurch gekennzeichnet, dass** der Arbeitsplatz Mittel (45 - 47) zur Erfassung von wenigstens einem Parameter in Bezug auf die Ausführung der Behandlungsoperation, sowie eine Vorrichtung (48) zur Übertragung dieses Parameters an die Einheit zur Verarbeitung von Informationen (62), um diese mit den Informationen zur Identifikation der an dem Arbeitsplatz behandelten Produkte zu verknüpfen, umfasst.
